**Europäisches Patentamt**

**European Patent Office**

**Office européen des brevets**

(19)

(11) Publication number: **0 011 444**
A2

(12) # EUROPEAN PATENT APPLICATION

(21) Application number: **79302503.2**

(22) Date of filing: **08.11.79**

(51) Int. Cl.³: **G 08 B 25/00**
**B 60 Q 7/00**

(30) Priority: **09.11.78 GB 4389278**

(43) Date of publication of application:
**28.05.80 Bulletin 80/11**

(84) Designated Contracting States:
**AT BE CH DE FR GB IT LU NL SE**

(71) Applicant: Lloyd, William
"The Alamo" Powder Works Lane
Melling Merseyside(GB)

(72) Inventor: Lloyd, William
"The Alamo" Powder Works Lane
Melling Merseyside(GB)

(74) Representative: Couch, Bernard Charles et al,
W.P. THOMPSON & CO. Coopers Building Church Street
Liverpool L1 3AB(GB)

(54) **Security system.**

(57) The system is especially intended to protect commercial motor vehicles, and provides in each vehicle at least one sensor (1') for instance, sensing, when activated, intrusion in or movement of the vehicle, connected to a memory (1) storing predetermined data relating to the vehicle e.g. registration number, load being carried and intended destination. The memory is arranged automatically to feed out the relevant data when the sensor is actuated by the intrusion or movement of the vehicle. This data is then fed to a radio frequency modulator (2) comprising a multiplexer and the modulated carrier is fed to a transmitter (3). The sensor, memory, modulator and transmitter are all provided in each vehicle. The transmitter automatically transmits the data to a relay (8), and the relay automatically transmits to a central receiver (10) which via a demodulator demultiplexer (13) operates a V.D.U (visual display unit 14) so that appropriate action can be taken in response to the received data.

EP 0 011 444 A2

Croydon Printing Company Ltd.

Fig 2.

1.

DESCRIPTION

"SECURITY SYSTEM"

The present invention relates to a security system for use at a plurality of fixed locations e.g. in enclosures such as buildings, or in a plurality of mobile locations such as in freight containers and on vehicles, such as motor vehicles and aircraft.

Machine control systems are known employing computers storing predetermined data and providing a read-out of such data in response to the detection by a sensor of a specified occurrence. It is also known, in data processing, to provide for the visual display of received and stored data and to store received data which is displayed or to be displayed.

Security systems are also known using a plurality of sensors e.g. T.V. cameras, feeding signals to a central control station for the purpose of monitoring some given thing such as the surroundings of the exterior of a building, or an industrial process.

Alarm systems are also known which on the occurrence of a given condition e.g. an intrusion, automatically provide an alarm signal. It is known in particular to provide such systems in motor vehicles and especially in goods vehicles.

The present invention is based on the idea of providing at each of a plurality of locations at which security protection or monitoring is to be provided, stored information identifying the location, and of arranging for the stored information automatically to be transmitted to a central station on the occurrence of a specified event or events, the central station indicating reception of all transmitted information to enable appropriate action to be taken.

2.

Thus, an object of the present invention is to provide a security system which permits a large number of widely dispersed locations to be surveilled from a central station by arranging that the surveillance is given only on demand from each location as and when the need therefor arises. This limits the attention the central station need give, to that location or those locations in respect of which some action is currently needed.

The present invention provides a security system comprising a memory sited at a location to be monitored, holding predetermined data relating to the location, a sensor associated with the memory; the memory being arranged automatically to provide a read-out of the data on actuation of the sensor in response to the occurrence of a specified event, and a remote indicator to receive a memory read-out and provide an indication of the nature thereof; wherein a transmission link is provided to transmit data read-out from the memory to the indicator; the link comprising; a data transmitter located at said location, and a receiver for transmitted data located at the site of indicator to feed data thereto.

The content of the predetermined data will depend on the particular use of the security system. For instance, if it is to be used as an anti-theft system on a commercial vehicle, the message may provide information concerning the registration number of the vehicle, its load, its intended destination and any other fact which it is considered is needed particularly to identify that vehicle. The sensor is arranged to detect a specified disturbance or change in circumstances. For instance, in the case of a security system for a vehicle, it could be arranged to be actuated by an unauthorised attempt to enter the vehicle or to drive it away. On

3.

such actuation, the sensor causes the message automatically to be read-out from the memory. The message
is then broadcast, for instance, by radio or by ultrasonic transmission, that is, air-pressure waves. The
receiver is located in some predetermined place and
receives the broadcast and thus enable the transmitted
message to receive appropriate attention. Since it
will be necessary to use low-power transmitters at
least in the case of radio transmission, then when
using such transmission, a local receiver or relay would
in practice be provided in each of a number of predetermined areas to receive any broadcast made in the area
concerned and to transmit it to the central receiver.

Since a great many of the memories may be in use
at any one time, the system may make provision for transmitting on a multiplex system, for instance, by time
sharing or frequency shift; and the transmission may be
made by radio modulation of a carrier wave. The system
may also incorporate a communication channel to permit
a transmission to be made otherwise than from the memory
so that the system may additionally be used as a means
of routine communication between the site of the memory
and the central receiver. Thus, the system may comprise
a manually operated data encoder operating through a
random access memory to feed a signal to the transmitter.
The system may also provide a microphone input to the
transmitter so that a voice signal can be incorporated
in the transmission.

Transmissions between a local receiver and the
central station receiver may be made for instance, by
telephone line, by radio as a microwave broadcast or
even by optical fibre; the signal received at the main
receiver being decoded and demodulated and, if necessary,
being demultiplexed, for read-out on a suitable displayed.
Further the system may provide for storage of all messages received. For instance, the system may be arranged to provide that a displayed message is automatically stored.

Thus, the invention contemplates that a large number of memories, which may be in the form of addressable programmable read only memories, would be installed in various enclosures and vehicles and would be served, probably via local receivers, by a central station receiver from where messages may be sent out so that action can be taken to deal with whatever situation has arisen.

The invention will now be described, by way of example, with reference to the accompanying drawings, in which:-

Figure 1 is a block diagram showing the general nature of a system according to the invention, and

Figure 2 is a block diagram of an embodiment thereof.

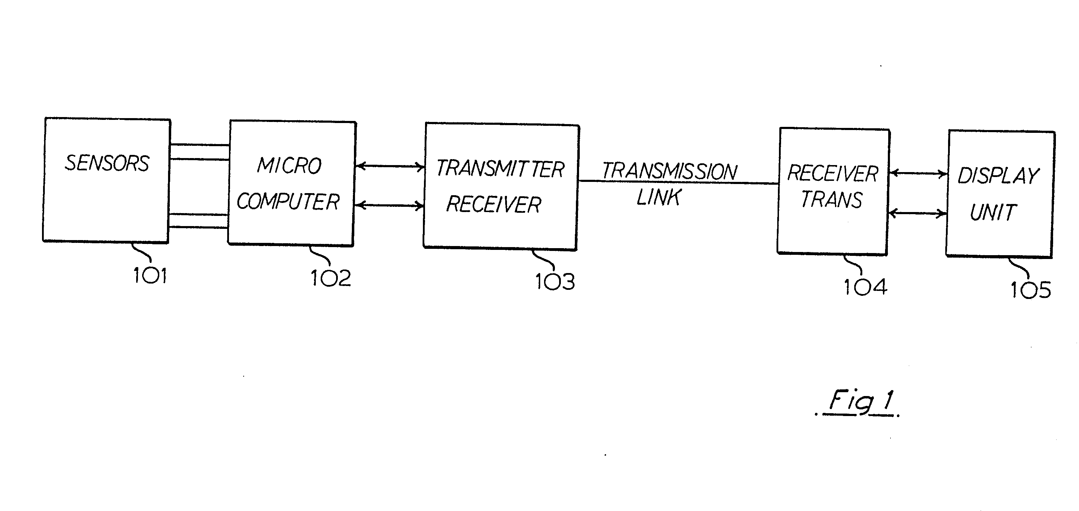

Referring to Figure 1, the system comprises a sensor 101 to detect the occurrence of some given event, the sensor being connected to a computer 102, e.g. a micro-computer. A computer is provided at each of a plurality of locations to be monitored or protected, along with one or more of the sensors. The computer memory at each location stores data identifying the location and is arranged so that on receiving a signal from a sensor, the computer automatically reads out the respective data, which may also contain information as to which sensor has been actuated. Each computer feeds its read-out to a transmitter 103 stationed at the location concerned, and the transmitter on receiving a read-out from the computer transmits the data by aerial broadcast or conductor to a central receiver 104 which in turn feeds the data to a visual display unit 105. The display unit is kept under human observation so that appropriate action can be taken in response to the displayed information. In certain circumstances, it may be sufficient to use incoming data simply to operate an alarm or other indicator devices without visual display.

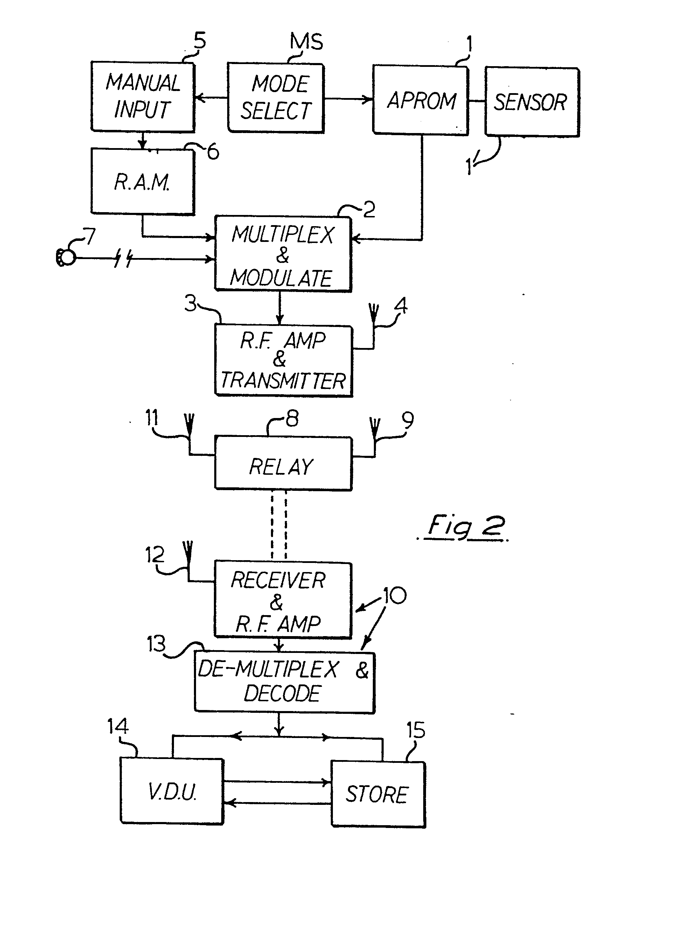

In Figure 2, the system comprises a memory 1 in the form of an addressable programmable read only memory (APROM). The memory contains a predetermined message and on actuation of a sensor 1', which may be one of several automatically feeds out the message to a modulator 2 by which a carrier frequency is modulated with the signal from the memory; the modulator output being fed to a radio frequency amplifier and transmitter 3 and transmitted therefrom via aerial 4.

The system also comprises at the site of each addressable memory, a communication channel for routine communication and a mode select switch MS to enable this channel to be selected for use. This comprises a manually operated data encoder 5 which may be of the keyboard type so that an encoded message can be written in to a random access memory (RAM) 6 which may, in addition, have predetermined messages written in. Thus, any message chosen by the operator may be written into the random access memory or some predetermined message already in there may be read-out by the operator on operation of an appropriate control. The random access memory may be arranged to repeat each message to be transmitted several times e.g. two or three times, and thereby provide automatic confirmation of the original message. The routine communication channel may also provide a voice link in the form of a microphone input 7 to the modulator. The modulator may incorporate a multiplexer for the reasons given above.

Normally, the addressable read only memory will be associated with a plurality of sensors at least some of which may be in the form of manually operated switches.

6.

For instance, if the system is being used in vehicles, a foot operated switch could be provided for operation by the driver in the case, for instance, of an attempted hi-jack; operation of the foot switch then causing the memory automatically to feed out an appropriate message for transmission to the central receiver. A further sensor could, for instance, be in the form of a pressure switch in the case where the vehicle is a tanker to sense any abrupt change in pressure such as would be occasioned by a leak from the tank; the sensor on activation reading out the appropriate message from the read only memory.

The transmission from the aerial 4 is picked up by a local relay 8 i.e. a receiver transmitter, and for this purpose an aerial 9 may be used. The local receiver then automatically transmits to a central receiver 10 which may be achieved by microwave radio broadcast in which case the stage 8 will be provided with a transmitter aerial 11 and the main receiver with a reception aerial 12. The main receiver comprises a decoding stage 13 and, if necessary a demultiplexer, and the signal is fed from the decoder both to a V.D.U (visual display unit) 14 and to a store 15. The display unit comprises a control for the store to permit incoming messages to be stored and to permit any stored message to be displayed on the display unit.

In practice, each communication channel would be constituted as a two-way channel as indicated in Figure 1 so that each memory could be addressed from the central station and each computer activated or deactivated therefrom. Thus, the channels could be used to check stored information, and also the operation of the local part of a communication channel and, in particular, the operation of each computer,

7.

from the central station. Accordingly, the transmitter 103 would be associated with a receiver and the receiver 104 would be associated with a transmitter.

1.

<u>CLAIMS</u>

1. A security system comprising a memory sited at a location to be monitored, holding predetermined data relating to the location, a sensor associated with the memory, the memory being arranged automatically to provide a read-out of the data on actuation of the sensor in response to the occurrence of a specified event, and a remote indicator unit to receive a memory read-out and provide an indication of the nature thereof; characterized in that a transmission link (103, 104; 4, 9, 10) is provided to transmit data read-out from the memory (102,1) to the indicator (105,14); the link comprising a data transmitter (103,3) located at said location, and a receiver (104, 9, 10) for transmitted data located at the site of indicator to feed data thereto.

2. A security system as claimed in claim 1, characterized in that said transmitter (103, 3) and receiver (104; 9,10) are constituted as a radio transmitter and receiver respectively.

3. A security system as claimed in claim 1, characterized in that a relay (18) is provided remotely located from said receiver (9,10) to relay a transmission from said transmitter (3) and relay it to said receiver (9,10).

4. A security system as claimed in any of the preceding claims, characterized in that a plurality of memories are used at respective locations to be monitored or protected each with associated transmitter, (103, 3) and an associated sensor (101,1') or sensors to detect a given condition, and each memory (102, 1) stores a predetermined message in respect of each given condition indicating the occurrence thereof; the actuation of a sensor of any memory causing an automatic read-out of the respective message from the memory and thereby its transmission to said indicator unit (105, 14).

5. A security system as claimed in claim 4, characterized in that, the transmitter (3) comprises a multiplexer (2), and the receiver (9,10) comprises a demultiplexer (13) whereby the transmission may be made, for instance, by time sharing or frequency shift.

6. A security system as claimed in any of the preceding claims, characterized in that, the system comprises, in respect of the or each location, a communication channel (5,6) to permit a transmission to be made otherwise than from the memory (1) so that the system may additionally be used as a means of routine communication between the site of the memory and the receiver (104).

7. A security system as claimed in claim 6, characterized in that, the additional communication channel (5,6) comprises a manual data encoder (5) operating through a random access memory (6) of feed data to the transmitter (3).

8. A security system as claimed in any of the preceding claims, characterized in that the indicator unit (14) is a V.D.U (visual display unit).

9. A security system as claimed in any of the preceding claims, characterized in that the or each memory is an addressable, programmable read only memory (1).

10. A security system as claimed in claim 9, characterized in that the store (15) is provided and is arranged automatically to store any displayed message.

SENSORS — MICRO COMPUTER — TRANSMITTER RECEIVER — TRANSMISSION LINK — RECEIVER TRANS — DISPLAY UNIT

101    102    103    104    105

Fig 1

1/2

*Fig 2*